# EUROPÄISCHE PATENTSCHRIFT

(11) **EP 0 465 612 B1**
(45) Veröffentlichungstag und Bekanntmachung des Hinweises auf die Patenterteilung: **13.12.1995**
(21) Anmeldenummer: 91901672.5
(22) Anmeldetag: 24.01.1991
(51) Int. Cl.: H05B 33/08, F21V 23/00

(54) **SCHALTUNGSANORDNUNG MIT MINDESTENS EINER LICHTABSTRAHLENDEN QUELLE**
CIRCUIT ARRANGEMENT WITH AT LEAST ONE LIGHT-EMITTING SOURCE
CIRCUIT COMPRENANT AU MOINS UNE SOURCE DE RAYONNEMENT LUMINEUX

(30) Priorität: 26.01.1990 CH 251/90
(43) Veröffentlichungstag der Anmeldung: 15.01.1992
(73) Patentinhaber: Busch & Mueller, D-58527 Meinerzhagen (DE)
(72) Erfinder: Noseda, Matthias, CH-9010 St. Gallen (CH)
(74) Vertreter: Kahlhöfer, Hermann, Dipl.-Phys.
(86) Internationale Anmeldenummer: CH9100021
(87) Internationale Veröffentlichungsnummer: WO9111896

(56) Entgegenhaltungen:
- EP-A- 0 026 950
- DE-A- 3 132 005
- DE-A- 3 444 178
- GB-A- 2 087 604
- US-A- 3 887 836
- US-A- 4 598 198
- Patent Abstracts of Japan, Band 3, Nr. 90 (E-127) 31. Juli 1979; & JP-A-5468183
- (TATEISH DENKI K.K.) 6. Januar 1979
- Patent Abstracts of Japan, Band 3, Nr 90, (E-127) 31. Juli 1979; & JP-A-5468184 (TATEISHI K.K.) 6. Januar 1979

## Beschreibung

Die vorliegende Erfindung betrifft eine Schaltungsanordnung mit mindestens einer lichtabstrahlenden Quelle und mit einem Generator, welcher die für den Betrieb der Schaltungsanordnung erforderliche Energie liefern kann.

Solche Schaltungsanordnungen sind aus dem Stand der Technik bekannt und sie werden an Gegenständen, insbesondere an Fahrzeugen, wie z. B. an Automobilen, Segelschiffen usw., verwendet. Fahrzeuge weisen normalerweise zumindest eine Beleuchtungsvorrichtung auf, welche während des Betriebes des Fahrzeugs von einem Generator mit Energie gespeist wird. Dieser Generator ist üblicherweise als eine durch den Motor des Fahrzeuges angetriebene Drehmaschine ausgeführt. Oft dient die Beleuchtung des Fahrzeuges unter anderem auch zur Kenntlichmachung des Fahrzeuges für die anderen Verkehrsteilnehmer.

Wenn der Betrieb des Generators unterbrochen wird, dann erlischt die Beleuchtung. Falls dies nicht zulässig ist, so wird die Beleuchtungsvorrichtung an die Batterie des Fahrzeuges angeschlossen. Die Lichtquellen in der Beleuchtungsvorrichtung verbrauchen normalerweise viel Energie, so daß sie an die Batterie nicht lange angeschlossen bleiben können.

Wenn die an die Batterie angeschlossene Beleuchtung über eine längere Zeitspanne funktionieren soll, dann ergibt dies beträchtliche Probleme.

Fahrräder sind normalerweise mit einem Wechselstromgenerator ausgerüstet, welcher durch eines der Räder des Fahrrades angetrieben wird. Falls das Fahrrad steht, so liefert der Generator keinen Strom mehr und die Beleuchtung des Fahrrades funktioniert folglich nicht mehr. Wenn es dunkel ist, dann steht das Fahrrad unbeleuchtet da und ein anderes Fahrzeug kann mit dem Fahrrad unter Umständen kollidieren.

Durch die DE 34 44 178 A1 ist eine Schaltungsanordnung für die Beleuchtungsanlage eines Fahrrades bekannt. Die Schaltungsanordnung umfaßt einen Generator, der die für den Betrieb dieser Schaltungsanordnung erforderliche Energie liefern kann, wobei der Schaltungsanordnung zumindest einer Leuchte zugeordnet ist und eine Glühlampe und zumindest eine Leuchtdiode umfaßt, wobei die Glühlampe an die Anschlüsse ageschlossen ist.

Durch die DE 31 32 005 A1 ist eine Fahrradbeleuchtungsanlage bekannt, bei der ein elektrischer Ladungsspeicher nach Unterschreiten einer bestimmten Mindestgeschwindigkeit bzw. Stillstand des Fahrrades die Versorgung der Beleuchtung solange aufrecht erhält, bis der Ladungsspeicher entladen ist.

Die Aufgabe der vorliegenden Erfindung ist, eine Schaltungsanordnung anzugeben, welche es ermöglicht, daß die Beleuchtung oder zumindest die Kenntlichmachung eines Gegenstandes unter Verbrauch einer nur geringen Menge von Energie sichergestellt ist.

Diese Aufgabe wird bei der Schaltungsanordnung der eingangs genannten Gattung erfindungsgemäß so gelöst, wie dies im kennzeichnenden Teil des Anspruchs 1 definiert ist.

Nachstehend werden Ausführungsformen der vorliegenden Erfindung anhand der beiliegenden Zeichnungen näher erläutert. Es zeigt:
- Fig. 1: einen Ausschnitt aus einem Fahrrad, wobei dieser Ausschnitt die Schlußleuchte des Fahrrades umfaßt, und
- Fig. 2 bis 4: einzelne Ausführungsmöglichkeiten der vorliegenden Schaltungsanordnung.

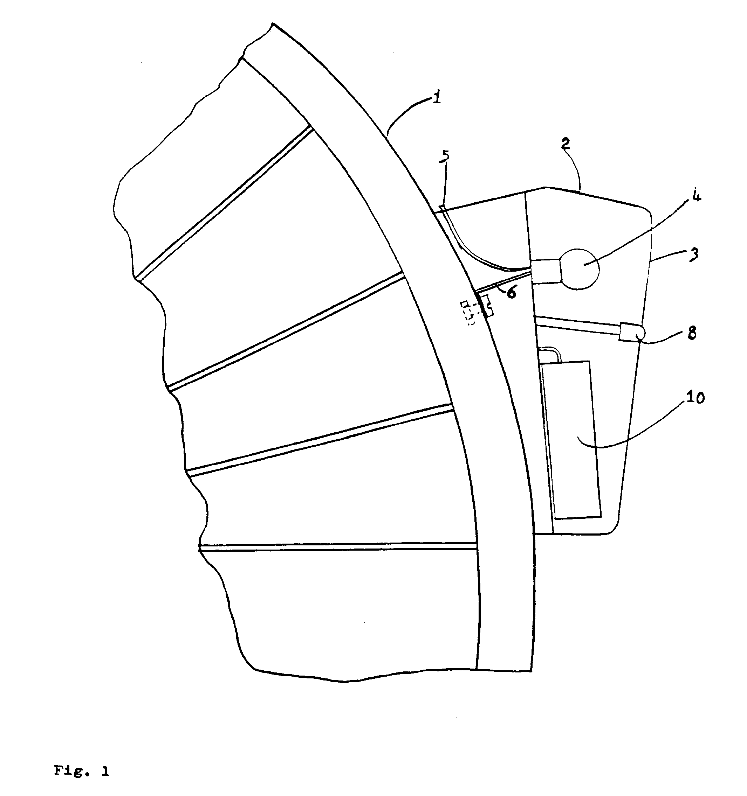

In Fig. 1 ist ein Ausschnitt aus einem Fahrrad dargestellt. Dieser Ausschnitt zeigt einen Abschnitt des hinteren Schutzbleches 1 des Fahrrades, wobei an diesem Schutzblech 1 die Schlußleuchte 2 des Fahrrades angebracht ist. Die Schlußleuchte 2 weist ein Gehäuse 3 einer an sich bekannten Bauart auf, in dem eine lichtabstrahlende Quelle 4, z. B. eine Glühbirne (Fig. 1 und 2) untergebracht ist. Diese Glühbirne 4 ist über Leitungen 5 und 6 an einen Generator 7 (Fig. 2 bis 4) angeschlossen. Der Glühbirne 4 ist eine Leuchtdiode 8 räumlich zugeordnet. Diese Leuchtdiode 8 befindet sich in der Nähe der Glühbirne 4 und vorteilhaft befindet sich die Leuchtdiode 8 ebenfalls im genannten Gehäuse 3. Wenigstens ein Teil der vorliegenden Schaltungsanordnung befindet sich ebenfalls im genannten Gehäuse 3.

Der Generator 7 erzeugt elektrischen Strom für den Betrieb der Schaltungsanordnung. Der Generator 7 ist vorteilhaft als eine Drehmaschine konstruiert, welche von einem äußeren Antriebsmittel angetrieben werden kann. Dieses Antriebsmittel kann eines der Räder eines Fahrrades oder aber auch ein Verbrennungsmotor sein, welcher zum Antrieb eines Fahrzeuges dient. Während des Betriebes der Antriebsmittel wird die Glühbirne 4 bzw. werden die Glühbirnen einer Beleuchtungsvorrichtung am betreffenden Gegenstand durch den Generator 7 mit Energie gespeist.

Die Leuchtdiode 8 weist eine Leuchtkraft von mindestens 3 Candela auf. Eine solche Leuchtdiode 8 wird beispielsweise durch die Firma Hewlett Packard unter der Bezeichnung 15 Candela HLMP-8150 vertrieben. Es handelt sich um eine ALGaAs-Diode. Das durch die Leuchtdiode 8 erzeugte Licht kann rot oder gelb sein. In Serie mit dieser Leuchtdiode 8 ist ein Schutzwiderstand 9 geschaltet.

Ein Kondensator 10 ist vorgesehen, welcher zur soeben genannten Leuchtdiode 8 parallel geschaltet ist. Dieser Kondensator 10 dient als eine Not-Energiequelle, wenn der Generator 7 sich außer Betrieb befindet und somit keine Energie für die Beleuchtung, für die Kenntlichmachung des Gegenstandes 1 usw. erzeugen kann. Vorteilhaft handelt es sich um einen Elektrolyt-Kondensator mit einer Kapazität von 3,3 F/5,5V. Zu diesem Zweck sind sogenannte Gold-E-Kondensatoren besonders geeignet. Der Kondensator 10 bzw. auch weitere Bestandteile der Schaltungsanordnung befinden sich im Gehäuse 3, wenn diese Schaltungsanordnung an einem Fahrrad montiert ist. Parallel zum Kondensator 10 ist eine Schutzdiode 11 geschaltet, welche eine Zenerdiode sein kann und welche den Kondensator 10 vor Überspannung schützen soll.

Wenn der Generator 7 ein Generator von Gleichstrom ist, dann ist die soeben beschriebene Schaltungsanordnung im Prinzip bereits betriebsfähig. Während des Betriebes des Generators 7 wird elektrische Energie an den übrigen Teil 8, 10 und 11 der Schaltungsanordnung geliefert. Hierbei befindet sich der Kondensator 10 im geladenen Zustand und die Leuchtdiode 8 erzeugt Licht. Fällt der Generator 7 aus oder wird der Betrieb desselben eingestellt, dann entlädt sich der Kondensator 10 über die Leuchtdiode 8, so daß diese weiterhin mit Energie versorgt wird. Folglich leuchtet die Leuchtdiode 8 auch dann, wenn der Generator 7 keine Energie mehr liefert. Die Ladung des Kondensators der vorstehend angegebenen Art gewährleistet den Betrieb der Leuchtdiode 8 während etwa 4 Minuten, nachdem der Betrieb des Generators 7 eingestellt worden ist.

In einer der Leitungen 5 bzw. 6 ist eine Diode 1 eingeschaltet, welche zwei Funktionen haben kann. Sie kann als Sperrdiode wirken, um zu verhindern, daß sich der Kondensator 10 auch durch den Generator 7 entlädt, nachdem der Betrieb desselben eingestellt worden ist. Wenn der Generator 7 ein Wechselstromgenerator ist, dann dient diese Diode 12 zugleich auch als Gleichrichter, damit dem übrigen Teil der Schaltungsanordnung Gleichstrom zugeführt werden kann.

Wie in Fig. 1 gezeigt ist, kann die Glühbirne 4 an den Generator 7 ebenfalls angeschlossen sein. Die Glühbirne 4 bzw. auch weitere bzw. andere Lichtabstrahler können Bestandteile einer Beleuchtungsvorrichtung des Gegenstandes bzw. eines Fahrzeugs sein. Diese Beleuchtungsvorrichtung kann zur inneren oder/und äußeren Beleuchtung des Fahrzeuges oder aber auch zur Beleuchtung der Fahrbahn oder ähnlich dienen. Gleichzeitig mit dieser Beleuchtungsvorrichtung brennt auch die Leuchtdiode 8, weil die durch diese Leuchtdiode 8 verbrauchte Energiemenge vernachlässigbar klein ist. Falls die Beleuchtungsvorrichtung außer Betrieb gesetzt wird, so wird die weniger intensiv leuchtende Diode 8 sichtbar. Es bedarf somit keines Umschalters zwischen dem Betrieb der Beleuchtungsvorrichtung und der Leuchtdiode 8.

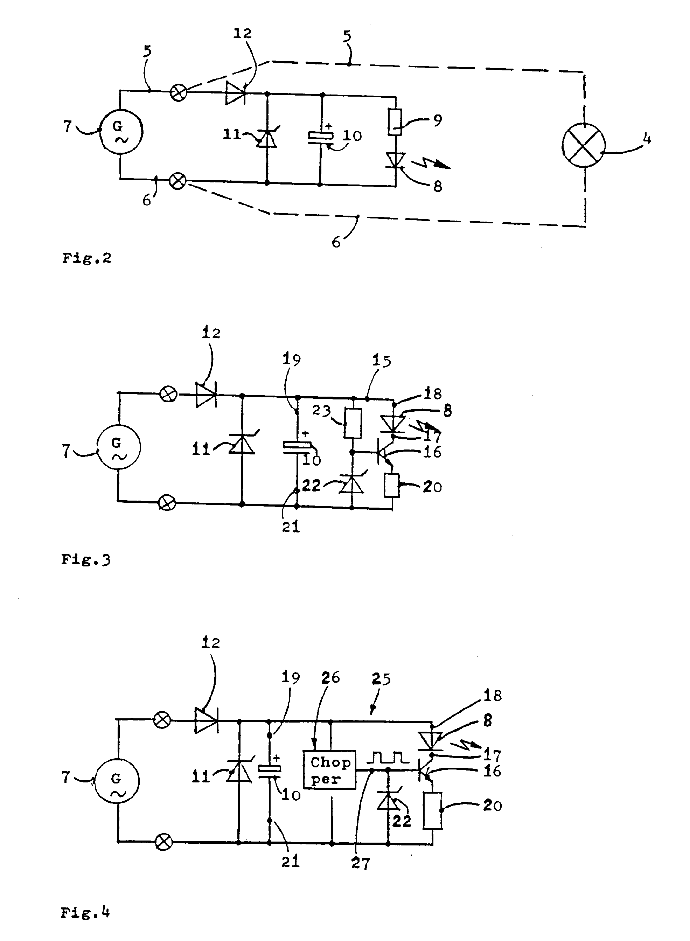

Während der bereits erwähnten Entladung des Kondensators 10 über die Leuchtdiode 8 nimmt die von diesem abgegebene Menge von Energie ab, so daß die Leuchtkraft der Leuchtdiode 8 dabei abnehmen kann. Um dies zu verhindern, ist die Leuchtdiode 8 über einen Schaltungskreis 15 (Fig. 3) an die Not-Energiequelle 10, d. h. an den Kondensator, angeschlossen. Dieser Schaltungskreis 15 ist derart ausgeführt, daß er die Menge der der Leuchtdiode 8 zugeführten Energie konstant halten kann.

Der Schaltungskreis 15 weist einen Transistor 16 auf. Eine der Elektroden 17 der Leuchtdiode 8 ist mit dem Kollektor des Transistors 16 verbunden, während die andere Elektrode 18 der Lichtquelle 8 an eine der Elektroden 19 der Not-Energiequelle 10 angeschlossen ist. Der Emitter des Transistors 16 ist über einen ersten Widerstand 20 des Schaltungskreises 15 an die andere Elektrode 21 der Not-Energiequelle 10 angeschlossen. Der Schaltungskreis 15 umfaßt auch eine Zenerdiode 22, welche zur Basis-Emitter-Strecke des Transistors 16 parallel geschaltet ist. Der Schaltungskreis 15 enthält schließlich einen zweiten Widerstand 23, welcher zwischen der Basis des Transistors 16 und der an die Not-Energiequelle 10 angeschlossene Elektrode 18 der Lichtquelle 8 geschaltet ist. Der der Leuchtdiode 8 zugeführte Strom ist Dank dem beschriebenen Schaltungskreis konstant und die Größe desselben ist somit von der Spannung am Kondensator 10 unabhängig. Der Innenwiderstand des Kondensators 10 beeinflußt den Strom durch die LED-Diode 8 nicht mehr.

Mit Hilfe der vorstehend beschriebenen Schaltungsanordnung kann eine bestimmte Helligkeitsstufe der Leuchtdiode 8 erreicht werden, welche sich dann nicht weiter verändern läßt, weil sie im wesentlichen durch die Werte der im Schaltungskreis verwendeten Bestandteile desselben gegeben ist. Es kann allerdings Fälle geben, in welchen die Helligkeit der Leuchtdiode 8 auch während des Betriebes der Schaltungsanordnung geändert werden soll. Es kann sogar verlangt werden, daß die Lichtabstrahlung von der Leuchtdiode 8 intermittierend erfolgen soll. Dies kann anhand eines Schaltungskreises erreicht werden, welcher zwischen der Leuchtdiode 8 und der Not-Energiequelle 10 eingeschaltet ist.

Dieser Schaltungskreis 25 weist ebenfalls einen Transistor 16 auf. Eine der Elektroden 17 der Leuchtdiode 8 ist mit dem Kollektor des Transistors 16 verbunden, während die andere Elektrode 18 der Leuchtdiode 8 an eine der Elektroden 19 der Not-Energiequelle 10 angeschlossen ist. Der Ermitter des Transistors 16 ist über einen ersten Widerstand 20 des Schaltungskreises 25 an die andere Elektrode 21 der Not-Energiequelle 10 angeschlossen. Der Schaltungskreis 25 umfaßt auch eine Zenerdiode 22, welche zur Basis-Ermitter-Strecke des Transistors 16 parallel geschaltet ist. Der Schaltungskreis 25 enthält schließlich einen Zerhacker 26, dessen Eingang an die Not-Energiequelle und dessen Ausgang 27 an die Basis des Transistors 16 angeschlossen ist.

Der Zerhacker 26, welcher durch Gleichspannung von der Not-Energiequelle 10 gespeist wird, erzeugt Impulse, die in die Basis des Transistors 16 zur Steuerung dieses geführt werden. Der Zerhacker 26 kann so konstruiert sein, daß die Breite der Impulse sowie die Breite der zwischen diesen liegenden Pausen in weiten Grenzen eingestellt werden kann.

Durch eine bloß impulsartige Zuführung von Energie zur Lichtquelle 8 kann Energie gespart werden, so daß die Brenndauer der nur aus der Not-Energiequelle 10 gespeisten Leichtdiode 8 wesentlich verlängert werden kann. Hierbei kann man die Frequenz der Impulse so wählen, daß das menschliche Auge, wegen seiner bekannten Trägheit beim Empfang optischer Wahrnehmungen, es nicht merkt, daß die Leuchtdiode 8 keinen kontinuierlichen Lichtfluß abgibt. In einem solchen Fall kann die Breite der Energieimpulse 100 Mikrosekunden und die Breite der Pausen dazwischen 1 Millisekunde betragen.

Ferner kann man die Amplitude und/oder Breite der Energieimpulse so wählen, daß eine extrem hohe Helligkeit der Lichtquelle 8 erreicht wird, ohne daß diese thermisch zerstört wird. Es gibt Leuchtdioden, welche nur bei einem bestimmten Impuls-Pause-Verhältnis optimal arbeiten. Wenn man den beschriebenen Schaltungskreis 25 verwendet, dann kann man eine solche Schaltungsanordnung bei jeder Art der jeweils verwendeten Leuchtdiode anwenden.

Falls man den Zerhacker 26 so einstellt, daß die Breite der Impulse beispielsweise 1 Sekunde und die Breite der Pausen dazwischen beispielsweise 5 Sekunden beträgt, dann kann die vorliegende Schaltungsanordnung als Blinkanlage, insbesondere als Warn-Blinkanlage verwendet werden.

## Patentansprüche

1. Schaltungsanordnung für die Beleuchtungsanordnung eines Fahrzeuges, mit Anschlüssen, an welche ein Generator (7) anschließbar ist, der die für den Betrieb dieser Schaltungsanordnung erforderliche Energie liefern kann, wobei die Schaltungsanordnung zumindest einer Leuchte (2) der Beleuchtungsvorrichtung zugeordnet ist und eine Glühlampe (4) und zumindest eine Leuchtdiode (8) umfaßt, wobei die Glühlampe (4) an die Anschlüsse angeschlossen ist, dadurch gekennzeichnet, daß die Leuchtdiode (8) der Glühlampe (4) räumlich zugeordnet ist, daß ein Kondensator (10) vorgesehen ist, welcher als eine Not-Energiequelle dient und welcher über einen Gleichrichter (12) parallel zur Glühlampe an den Anschlüssen geschaltet ist und daß die Leuchtdiode parallel zum Kondensator geschaltet ist.

2. Schaltungsanordnung nach Anspruch 1, dadurch gekennzeichnet, daß die Leuchte (2) ein Gehäuse (3) aufweist, daß sowohl die Glühlampe (4) als auch die Leuchtdiode (8) sich in diesem Gehäuse (3) befinden und daß die Leuchte (2) zur inneren oder/und äußeren Beleuchtung des Fahrzeuges oder aber auch zur Beleuchtung der Fahrbahn dient.

3. Schaltungsanordnung nach Anspruch 2, dadurch gekennzeichnet, daß der Kondensator (10) ein Elektrolytkondensator, vorteilhaft ein Gold-E-Kondensator ist und daß dieser Kondensator sich ebenfalls im Gehäuse (3) der Leuchte (2) befinden kann.

4. Schaltungsanordnung nach Anspruch 1, dadurch gekennzeichnet, daß die Leuchtdiode (8) über einen Schaltungskreis (15) an die Not-Energiequelle (10) angeschlossen ist, und daß dieser Schaltungskreis (15) derart ausgeführt ist, daß er die Menge der der Leuchtdiode (8) zugeführten Energie kontant halten kann.

5. Schaltungsanordnung nach Anspruch 4, dadurch gekennzeichnet, daß der Schaltungskreis (15) einen Transistor (16) aufweist, daß eine der Elektroden (17) der Leuchtdiode (8) mit dem Kollektor des Transistors (16) verbunden ist, während die andere Elektrode (18) der Leuchtdiode (8) an eine der Elektroden (19) der Not-Energiequelle (10) angeschlossen ist, daß der Emitter des Transistors (16) über einen ersten Widerstand (20) des Schaltgungskreises (15) an die andere Elektrode (21) der Not-Energiequelle (10) angeschlossen ist, daß der Schaltungskreis (15) ferner eine Zenerdiode (22) enthält, welche zur Basis-Emitter-Strecke des Transistors (16) parallel geschaltet ist, und daß der Schaltungskreis schließlich einen zweiten Widerstand (23) aufweist, welcher zwischen der Basis des Transistors (16) und der an die Not-Energiequelle (10) angeschlossene Elektrode (18) der Leuchtdiode (8) geschaltet ist.

6. Schaltungsanordnung nach Anspruch 1, dadurch gekennzeichnet, daß die Leuchtdiode (8) über einen Schaltungskreis (25) an die Not-Energiequelle (10) angeschlossen ist, welcher derart ausgeführt ist, daß die Menge der der Leuchtdiode (8) zugeführten Energie eingestellt werden kann.

7. Schaltungsanordnung nach Anspruch 6, dadurch gekennzeichnet, daß der Schaltungskreis (25) einen Transistor (16) aufweist, daß eine der Elektroden (17) der Leuchtdiode (8) mit dem Kollektor dieses Transistors (16) verbunden ist, während die andere Elektrode (18) der Leuchtdiode (8) an eine der Elektroden (19) der Not-Energiequelle (10) angeschlossen ist, daß der Emitter des Transistors (16) über einen Widerstand (20) des Schaltungskreises (25) an die andere Elektrode (21) der Not-Energiequelle (10) angeschlossen ist, daß der Schaltungskreis (25) ferner eine Zenerdiode (22) enthält, welche zur Basis-Emitter-Strecke des Transistors (16) parallel geschaltet ist, und daß der Schaltungskreis (25) schließlich einen Zerhacker (26) aufweist, dessen Eingang an die Not-Energiequelle (10) und dessen Ausgang (27) an die Basis des Transistors (16) angeschlossen ist.

8. Schaltungsanordnung nach Anspruch 1, dadurch gekennzeichnet, daß eine Zenerdiode (11) zum Kondensator (10) parallel geschaltet ist.

9. Schaltungsanordnung nach Anspruch 1, dadurch gekennzeichnet, daß ein Schutzwiderstand (9) mit der Leuchtdiode (8) in Serie geschaltet ist.

10. Schaltungsanordnung nach Anspruch 2, dadurch gekennzeichnet, daß neben den Lichtquellen (4, 8) sich noch weitere Teile der Schaltungsanordnung im Gehäuse (3) befinden.

## Claims

1. A circuit arrangement for the lighting arrangement of a vehicle, having connections to which a generator (7) which can supply the energy required for operation of the circuit arrangement can be connected, wherein the circuit arrangement is associated with at least one light (2) of the lighting assembly and includes an incandescent lamp (4) and at least one light emitting diode (8), wherein the incandescent lamp (4) is connected to the connections, characterised in that the light emitting diode (8) is spatially associated with the incandescent lamp (4), that there is provided a capacitor (10) which serves as an emergency energy source and which is connected to the connections by way of a rectifier (12) in parallel with the incandescent lamp, and that the light emitting diode is connected in parallel with the capacitor.

2. A circuit arrangement according to claim 1 characterised in that the light (2) has a housing (3), that both the incandescent lamp (4) and the light emitting diode (8) are disposed in said housing (3) and that the light (2) serves for internal and/or external lighting of the vehicle or however also for lighting the carriageway.

3. A circuit arrangement according to claim 2 characterised in that the capacitor (10) is an electrolytic capacitor, advantageously a gold-E-capacitor, and that said capacitor can also be disposed in the housing (3) of the light (2).

4. A circuit arrangement according to claim 1 characterised in that the light emitting diode (8) is connected to the emergency energy source (10) by way of a circuit assembly (15) and that said circuit assembly (15) is so designed that it can keep constant the amount of energy fed to the light emitting diode (8).

5. A circuit arrangement according to claim 4 characterised in that the circuit assembly (15) has a transistor (16), that one of the electrodes (17) of the light emitting diode (8) is connected to the collector of the transistor (16) while the other electrode (18) of the light emitting diode (8) is connected to one of the electrodes (19) of the emergency energy source (10), that the emitter of the transistor (16) is connected by way of a first resistor (20) of the circuit assembly (15) to the other electrode (21) of the emergency energy source (10), that the circuit assembly (15) further includes a Zener diode (22) which is connected in parallel with the base-emitter path of the transistor (16) and that finally the circuit assembly has a second resistor (23) which is connected between the base of the transistor (16) and the electrode (18) of the light emitting diode (8), which is connected to the emergency energy source (10).

6. A circuit arrangement according to claim 1 characterised in that the light emitting diode (8) is connected to the emergency energy source (10) by way of a circuit assembly (25) which is so designed that the amount of energy fed to the light emitting diode (8) can be adjusted.

7. A circuit arrangement according to claim 6 characterised in that the circuit assembly (25) has a transistor (16), that one of the electrodes (17) of the light emitting diode (8) is connected to the collector of that transistor (16) while the other electrode (18) of the light emitting diode (8) is connected to one of the electrodes (19) of the emergency energy source (10), that the emitter of the transistor (16) is connected by way of a resistor (20) of the circuit assembly (25) to the other electrode (21) of the emergency energy source (10), that the circuit assembly (25) further includes a Zener diode (22) which is connected in parallel with the base-emitter path of the transistor (16), and that finally the circuit assembly (25) has a chopper (26) whose input is connected to the emergency energy source (10) and whose output (27) is connected to the base of the transistor (16).

8. A circuit arrangement according to claim 1 characterised in that a Zener diode (11) is connected in parallel with the capacitor (10).

9. A circuit arrangement according to claim 1 characterised in that a protective resistor (9) is connected in series with the light emitting diode (8).

10. A circuit arrangement according to claim 2 characterised in that besides the light sources (4, 8) further members of the circuit arrangement are also disposed in the housing (3).

## Revendications

1. Dispositif de commande destiné au dispositif d'éclairage d'un véhicule, comportant des connexions auxquelles il est possible de relier un générateur (7) qui peut délivrer l'énergie nécessaire au fonctionnement de ce dispositif de commande, le dispositif de commande étant associé à au moins un feu (2) du dispositif d'éclairage et comprenant une lampe à incandescence (4) et au moins une diode lumineuse (8), la lampe à incandescence (4) étant reliée aux connexions, caractérisé en ce que la diode lumineuse (8) est associée dans l'espace à la lampe à incandescence (4), en ce qu'il est prévu un condensateur (10) qui sert de source d'énergie de secours et qui, par l'intermédiaire d'un redresseur (12), est relié aux connexions en parallèle avec la lampe à incandescence et en ce que la diode lumineuse est montée en parallèle avec le condensateur.

2. Dispositif de commande selon la revendication 1, caractérisé en ce que le feu (2) possède un boîtier (3), en ce que non seulement la lampe à incandescence (4), mais encore la diode lumineuse (8) se trouvent dans ce boîtier (3) et en ce que le feu (2) sert à l'éclairage interne et/ou externe du véhicule ou bien également à l'éclairage de la chaussée.

3. Dispositif de commande selon la revendication 2, caractérisé en ce que le condensateur (10) est un condensateur électrochimique, de préférence un condensateur électrochimique à or, et en ce que ce condensateur peut également se trouver dans le boîtier (3) du feu (2).

4. Dispositif de commande selon la revendication 1, caractérisé en ce que la diode lumineuse (8) est reliée à la source d'énergie de secours (10) par l'intermédiaire d'un circuit de commande (15) et en ce que ce circuit de commande (15) est réalisé de telle sorte qu'il peut maintenir constante la quantité d'énergie amenée à la diode lumineuse (8).

5. Dispositif de commande selon la revendication 4, caractérisé en ce que le circuit de commande (15) possède un transistor (16), en ce que l'une des électrodes (17) de la diode lumineuse (8) est reliée au collecteur du transistor (16) tandis que l'autre électrode (18) de la diode lumineuse (8) est reliée à l'une des électrodes (19) de la source d'énergie de secours (10), en ce que l'émetteur du transistor (16) est relié à l'autre électrode (21) de la source d'énergie de secours (10) par l'intermédiaire d'une première résistance (20) du circuit de commande (15), en ce que le circuit de commande (15) comprend en outre une diode Zener (22) qui est montée en parallèle avec l'intervalle base-émetteur du transistor (16) et en ce que le circuit de commande possède enfin une seconde résistance (23) qui est reliée entre la base du transistor (16) et l'électrode (18) de la diode lumineuse (8), reliée à la source d'énergie de secours (10).

6. Dispositif de commande selon la revendication 1, caractérisé en ce que la diode lumineuse (8) est reliée à la source d'énergie de secours (10) par l'intermédiaire d'un circuit de commande (25) qui est réalisé de telle sorte que la quantité d'énergie amenée à la diode lumineuse (8) peut être réglée.

7. Dispositif de commande selon la revendication 6, caractérisé en ce que le circuit de commande (25) possède un transistor (16), en ce que l'une des électrodes (17) de la diode lumineuse (8) est reliée au collecteur du transistor (16) tandis que l'autre électrode (18) de la diode lumineuse (8) est reliée à l'une des électrodes (19) de la source d'énergie de secours (10), en ce que l'émetteur du transistor (16) est relié à l'autre électrode (21) de la source d'énergie de secours (10) par l'intermédiaire d'une première résistance (20) du circuit de commande (25), en ce que le circuit de commande (25) comprend en outre une diode Zener (22) qui est montée en parallèle avec l'intervalle base-émetteur du transistor (16) et en ce que le circuit de commande (25) possède enfin un découpeur (26) dont l'entrée est reliée à la source d'énergie de secours (10) et dont la sortie (27) est reliée à la base du transistor (16).

8. Dispositif de commande selon la revendication 1, caractérisé en ce qu'une diode Zener (11) est connectée en parallèle avec le condensateur (10).

9. Dispositif de commande selon la revendication 1, caractérisé en ce qu'une résistance protectrice (9) est connectée en série avec la diode lumineuse (8).

10. Dispositif de commande selon la revendication 2, caractérisé en ce que, outre les sources lumineuses (4, 8), il se trouve d'autres pièces du dispositif de commande dans le boîtier (3).
